Europäisches Patentamt

European Patent Office

Office européen des brevets

(11) Numéro de publication : **0 320 388 B1**

(12) **FASCICULE DE BREVET EUROPEEN**

(45) Date de publication du fascicule du brevet :
19.02.92 Bulletin 92/08

(51) Int. Cl.⁵ : **H02G 11/02**

(21) Numéro de dépôt : **88403120.4**

(22) Date de dépôt : **08.12.88**

(54) **Enrouleur de faisceaux de fils connecteurs disposés en nappes.**

(30) Priorité : **10.12.87 FR 8717521**

(43) Date de publication de la demande :
**14.06.89 Bulletin 89/24**

(45) Mention de la délivrance du brevet :
**19.02.92 Bulletin 92/08**

(84) Etats contractants désignés :
**DE GB IT**

(56) Documents cités :
**EP-A- 0 104 833**
**FR-A- 2 041 352**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Dos Santos, Francis**
**4, rue Desbassayns de Richemont**
**F-92150 Suresnes (FR)**

(74) Mandataire : **Boivin, Claude**
**9, rue Edouard-Charton**
**F-78000 Versailles (FR)**

EP 0 320 388 B1

Jouve, 18, rue Saint-Denis, 75001 PARIS

## Description

La présente invention concerne un enrouleur de faisceaux de fils conducteurs disposés en nappe et munis d'un connecteur amont et d'un connecteur aval, coopérant avec un robot manipulateur pour le montage automatique de ces faisceaux.

L'enrouleur qui fait l'objet de l'invention s'applique à des nappes s'étendant perpendiculairement aux connecteurs.

On sait qu'en général, lorsqu'un robot manipulateur saisit par ses connecteurs d'extrémité, une nappe électrique afin de réaliser son montage, l'entraînement de la nappe pendant le déplacement du robot présente des risques d'accrochage.

L'enrouleur qui fait l'objet de l'invention remédie à cet inconvénient et est caractérisé en ce qu'il comporte un tambour monté à rotation sur un support et muni de moyens d'entraînement, des moyens pour brider le connecteur amont sur ce tambour, et des moyens de butée pour limiter la rotation du tambour, donc l'enroulement.

Il est également caractérisé par le fait qu'il comporte des moyens d'asservissement pneumatique coopérant avec les moyens d'asservissement du robot pour effectuer les opérations d'enroulement et de déroulement tout en maintenant la nappe sous tension.

On a décrit ci-après, à titre d'exemple non limitatif, un mode de réalisation de l'enrouleur selon l'invention, avec référence aux dessins annexés dans lesquels :
  – La Figure 1 en est une vue de face;

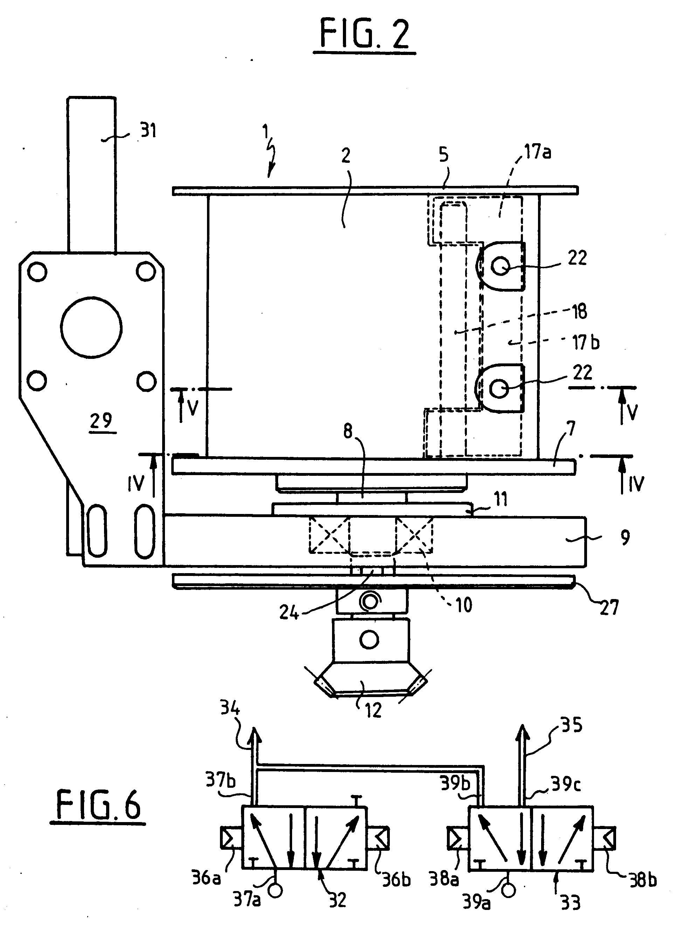

  – La Figure 2 en est une vue de dessus;

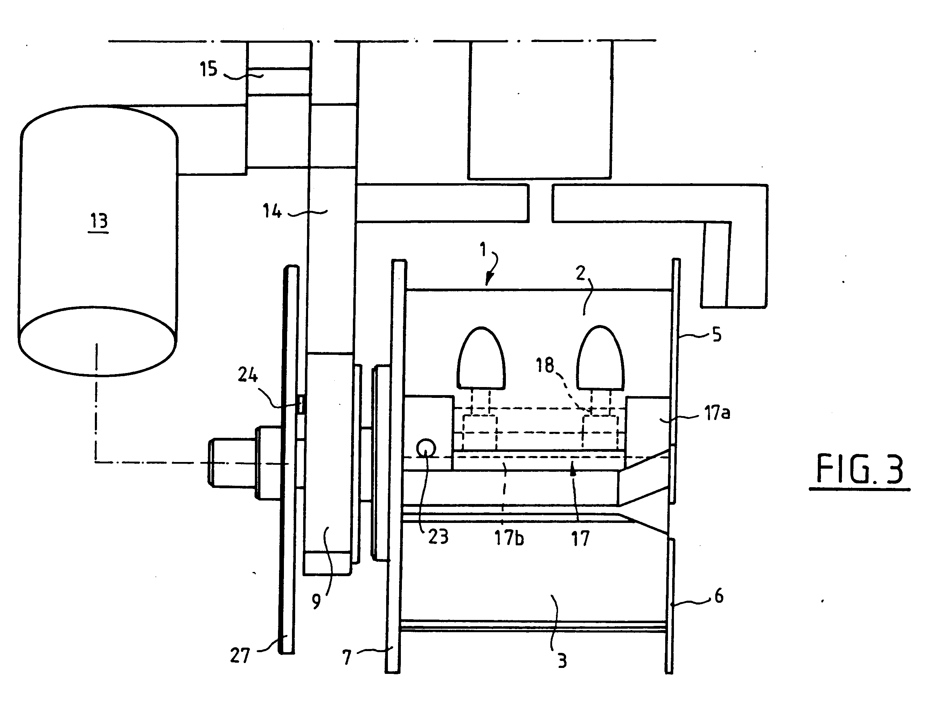

  – La Figure 3 en est une vue de profil;

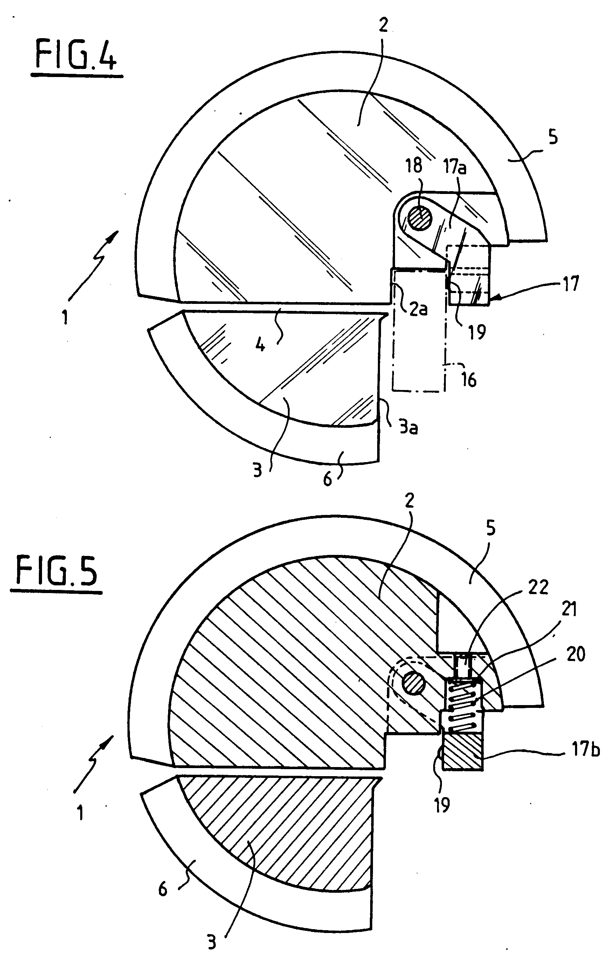

  – La Figure 4 en est une vue en coupe transversale suivant IV-IV de la Figure 2;
  – La Figure 5 en est une vue en coupe transversale suivant V-V de la Figure 2;
  – La Figure 6 est le schéma pneumatique de l'asservissement.

L'enrouleur de nappes selon l'invention comprend un tambour, désigné d'une façon générale par la référence 1 et comprenant un demi-cylindre supérieur 2 et un demi-cylindre inférieur 3 écarté du premier par un intervalle 4 d'une épaisseur sensiblement égale à celle d'une nappe de câbles. Chacun des demi-cylindres est solidaire d'un demi-flasque 5 et respectivement 6; les deux demi-cylindres sont fixés à un même flasque commun 7. Le tambour 1 est fixé à un arbre de transmission 8 qui est monté à rotation dans un support 9 par l'intermédiaire d'un roulement à billes 10 maintenu dans le support à l'aide d'une coquille 11. L'arbre 8 porte un pignon conique 12 en prise avec un pignon conique non visible au dessin et calé sur l'arbre de sortie d'un moteur pneumatique réversible 13 à palettes, fixé sur le support 9 à l'aide d'une semelle 14 et d'une entretoise 15.

Chacun des demi-cylindres 2 et 3 présente un embrèvement 2a ou 3a pour loger l'un des connecteurs 16 de la nappe et des moyens de bridage de ce connecteur sur le tambour 1.

Les moyens de bridage du connecteur 16 sur le tambour sont constitués par une bride 17 comportant deux oreilles 17a articulées sur un axe 18 porté par le demi-cylindre 2; ces oreilles sont reliées l'une à l'autre par un pontet 17b muni de poussoirs à ressorts 19. Des ressorts 20 sont interposés entre le pontet 17b et une entretoise 21 en butée contre des vis de réglage 22. Le demi-cylindre supérieur 2 est muni d'une butée réglable 23 propre à limiter le pivotement de la bride 17 autour de l'axe 18 sous l'action des ressorts 20. Des moyens sont prévus pour limiter la rotation du tambour 1 par rapport au support 9 donc l'enroulement de la nappe de câbles sur le tambour. Ces moyens comprennent un doigt 24 engagé à la fois dans un trou oblong 25 ménagé radialement dans le support 9 et dans une lumière en spirale 26 réalisée dans un disque 27 solidaire de l'arbre de transmission 8; une butée réglable 28 est montée dans le trou 25 et limite la course du doigt 24. On conçoit que, lorsque le tambour 1 tourne, le doigt 24 se déplace radialement dans le trou oblong 25 sous l'effet de l'effort exercé sur lui par les bords de la lumière 26. Quand il rencontre la butée 28 et qu'il ne peut plus se déplacer dans le trou 25, il empêche le tambour 1 de continuer à tourner.

Le support 9 est solidaire d'un porte-pince 29 sur lequel sont montés un ensemble comprenant une pince pneumatique 30 et deux mors 31 et propre à maintenir en position l'extrémité de la nappe opposée au connecteur 16.

Le moteur pneumatique 13 est alimenté en air comprimé par un ensemble de deux électro-vannes 32 et 33, auquel il est relié par un conduit 34 correspondant à la rotation du moteur dans le sens trigonométrique (enroulement de la nappe) et par un conduit 35 correspondant à la rotation du moteur dans le sens horaire. Ces électrovannes sont à cinq orifices pour deux positions et unidirectionnelles dans le sens des flèches.

La vanne 32 peut être actionnée par deux électro-aimants 36a et 36b; son orifice 37a est relié à une source de pression de, par exemple, $6.10^5$ Pa (6 bars) et son orifice 37b est relié au conduit 34.

De son côté, la vanne 33 peut être actionnée par deux électro-aimants 38a et 38b; son orifice 39a est relié à une source de pression de, par exemple, $3.10^5$ Pa (3 bars), alors que son orifice 39b est relié au conduit 34 et son orifice 39c au conduit 35.

Dans ces conditions, on voit que, lorsque les électro-aimants 36a et 38a sont excités (position représentée au dessin), le conduit 34 est à $6.10^5$ Pa (6 bars), le fluide à $6.10^5$ Pa (6 bars) ne peut pas traverser la vanne 33 puisque celle-ci est unidirectionnelle dans le sens opposé. Lorsque les électro-aimants 36b et 38a sont excités, le conduit 34 est à 3.10⁵ Pa (3 bars). Enfin , lorsque les électro-aimants 36b et 38b sont excités, le conduit 35 est à 3.10⁵ Pa (3 bars).

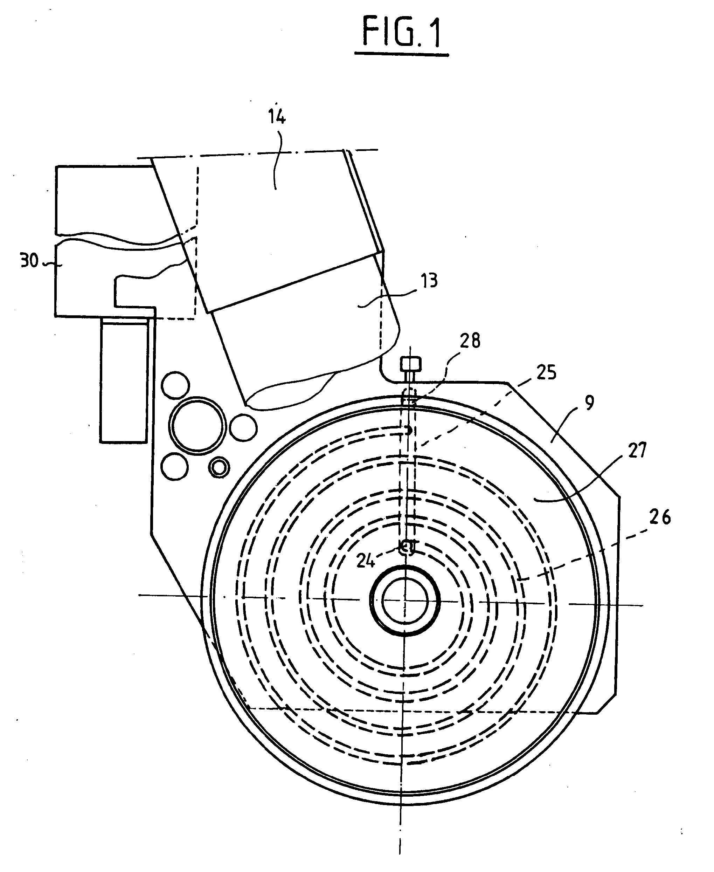

L'enrouleur qui vient d'être décrit fonctionne de la manière suivante. On règle tout d'abord la position du disque 27 de façon que le doigt mobile 24 soit au début de la spirale 26, comme représenté à la Figure 1. On règle ensuite la butée 28 de façon à obtenir le nombre de tours désiré par le tambour 1, par exemple trois tours et demi. Le fonctionnement de l'enrouleur est ensuite asservi avec celui du robot manipulateur. Les électro-aimants 36b et 38b étant sous tension, et la butée 24 au fond de la lumière 26, le robot s'approche du connecteur et l'enrouleur assure l'engagement du connecteur 16 dans les embrèvements 2a et 3a , sous la bride 17, en faisant passer la nappe dans l'intervalle 4. Puis les électro-aimants 36a et 38a sont mis sous tension de sorte que le tambour 1 se met à tourner dans le sens trigonométrique, la nappe de câbles s'enroulant sur lui. Pendant ce temps, le robot se déplace vers le connecteur aval de la nappe afin d'éviter qu'une traction ne soit exercée sur cette nappe. Un peu avant la fin de l'enroulement, c'est-à-dire un peu avant que le doigt 24 ne vienne rencontrer la butée 28, l'électro-aimant 36b est mis sous tension, l'électro-aimant 38a étant maintenu sous tension; le tambour 1 continue ainsi de tourner mais à vitesse lente. Puis le robot coiffe le deuxième connecteur de la nappe, après l'enroulement,et assure son maintien par la pince 30 et les mors 31.

L'enroulement terminé, le robot se dirige vers le poste de déchargement, c'est-à-dire vers les connecteurs récepteurs. Arrivé en position, il insère le connecteur aval; l'électro-aimant 38b est alors mis sous tension, l'électro-aimant 36b étant maintenu sous tension. Le tambour 1 se met à tourner à vitesse lente dans le sens horaire et la nappe de câbles se déroule pendant que le robot se déplace. Enfin le robot insère le connecteur amont 16. Le cycle de fonctionnement est ainsi terminé.

## Revendications

1. Enrouleur de nappes, coopérant avec un robot manipulateur, pour le montage automatique de nappes électriques munies d'un connecteur amont (16) et d'un connecteur aval et s'étendant perpendiculairement aux connecteurs, caractérisé en ce qu'il comporte un tambour (1) monté à rotation par rapport à un support (9) et associé à des moyens d'entraînement (13), des moyens (17, 17a, 17b, 18) pour brider le connecteur amont (16) sur le tambour (1) et des moyens de butée (24, 25, 26, 27, 28) pour limiter le mouvement de rotation du tambour (1), donc l'enroulement.

2. Enrouleur de nappes selon la revendication 1, caractérisé en ce que le tambour (1) comprend un demi-cylindre supérieur (2) et un demi-cylindre inférieur (3) montés sur un flasque commun (7) et séparés par un intervalle (4) dans lequel peut s'engager la nappe, ledit flasque commun (7) étant relié à l'arbre de sortie d'un moteur (13) préférentiellement pneumatique.

3. Enrouleur de nappes selon la revendication 2, caractérisé en ce que le demi-cylindre supérieur (2) et le demi-cylindre inférieur (3) comportent les embrèvements (2a et 3a) nécessaires pour loger le connecteur amont (16) et ses moyens de bridage (17, 17a, 17b, 18).

4. Enrouleur de nappes selon la revendication 2 ou 3, caractérisé en ce que les moyens de bridage du connecteur amont (16) comprennent une bride (17) comportant deux oreilles (17a) articulées sur un axe (18) monté sur le demi-cylindre supérieur (2), les deux oreilles (17a) étant reliées par un pontet (17b) sur lequel appuient des ressorts (20) exerçant un effort de serrage sur le connecteur (16).

5. Enrouleur selon la revendication 4, caractérisé en ce que le demi-cylindre supérieur (2) est muni d'une butée réglable (23) propre à limiter la rotation autour de son axe de la bride de serrage (17).

6. Enrouleur selon la revendication 2 ou 4, caractérisé en ce que les moyens de butée d'enroulement comprennent un doigt (24) mobile coulissant à la fois dans un trou oblong (25) de longueur réglable ménagé dans le support (9) de l'enrouleur et dans une lumière en spirale (26) réalisée sur un disque (27) solidaire en rotation du moteur (13).

7. Enrouleur selon l'une quelconque des revendications précédentes, caractérisé en ce qu'il comporte un asservissement pneumatique coopérant avec l'asservissement du robot manipulateur et propre à appliquer au moteur pneumatique (18) une pression correspondant à l'enroulement rapide, à l'enroulement lent, ou au déroulement, compatible avec la vitesse de déplacement du robot de manière que la nappe soit toujours en tension.

## Patentansprüche

1. Aufwickelvorrichtung für Lagen, welche mit einem automatischen Manipulator kooperiert, für den selbstregelnden Einbau von elektrischen Lagen, die mit einem oberen Anschlußteil (16) und mit einem unteren Anschlußteil versehen sind und sich senkrecht zu den Anschlußteilen erstrecken, **dadurch gekennzeichnet,** daß sie eine Trommel (1) aufweist, die drehbar an einem Tragelement (9) befestigt und mit einer Antriebseinrichtung (13), mit einer Einrichtung (17, 17a, 17b, 18) zum Aufspannen des oberen Anschlußteiles (16) an der Trommel (1) und mit einer Anschlag-Einrichtung (24, 25, 26, 27, 28) zur Begrenzung der Drehbewegung der Trommel (1) und damit des Aufwickelns, verbunden ist.

2. Aufwickelvorrichtung für Lagen nach Anspruch 1, **dadurch gekennzeichnet**, daß die Trommel (1) einen oberen Halbzylinder (2) und einen unteren Halbzylinder (3) besitzt, welche an einem gemeinsamen Flansch (7) angebaut und durch einen Zwischenraum (4) voneinander getrennt sind, in den die Lage eingesetzt werden kann, wobei der gemeinsame Flansch (7) mit der Ausgangswelle eines Motors (13), vorzugsweise eines Druckluftmotors, verbunden ist.

3. Aufwickelvorrichtung für Lagen nach Anspruch 2, **dadurch gekennzeichnet**, daß der obere Halbzylinder (2) und der untere Halbzylinder (3) Spannflächen (2a und 3a) aufweisen, die erforderlich sind, um das obere Anschlußteil (16) und seine Aufspanneinrichtung (17, 17a, 17b, 18) einzufügen.

4. Aufwickelvorrichtung für Lagen nach Anspruch 2 oder 3, **dadurch gekennzeichnet,** daß die Aufspanneinrichtung für das obere Anschlußteil (16) einen Bügel (17) mit zwei Ansätzen (17a) umfaßt, die gelenkig auf einer am oberen Halbzylinder (2) befestigten Achse (18) gelagert sind, wobei die beiden Ansätze (17a) über einen Bügel (17b) miteinander verbunden sind, an dem sich Federn (20) abstützen, die auf das Anschlußteil (16) eine Spannkraft ausüben.

5. Aufwickelvorrichtung nach Anspruch 4, **dadurch gekennzeichnet**, daß der obere Halbzylinder (2) mit einem einstellbaren Anachlag (23) versehen ist, der imstande ist, die Drehung des Aufspannbügels (17) um seine Schwenkachse zu begrenzen.

6. Aufwickelborrichtung nach Anspruch 2 oder 4, **dadurch gekennzeichnet,** daß die Anschlag-Einrichtung für den Aufwickelvorgang einen beweglichen Finger (24) enthält, der einerseits in einem Schlitzloch (25) von einstellbarer Länge gleitet, das in dem Tragelement (9) der Aufwickelvorrichtung eingearbeitet ist, und andererseits In einem spiralförmigen Schlitz (26), der in einer mit dem Motor (13) verbundenen Scheibe (27) eingearbeitet ist.

7. Aufwickelvorrichtung nach einem der vorhergehenden Ansprüche, **dadurch gekennzeichnet**, daß sie ein pneumatisches Regelsystem enthält, das mit dem Regelsystem des automatischen Manipulators zusammenarbeitet und imstande ist, auf den Druckluftmotor (13) einen Druck auszuüben, der dem schnellen Aufwickeln, dem langsamen Aufwickeln oder dem Abwickeln entspricht, in Anpassung an die Geschwindigkeit der Verstellung des Automaten in der Weise, daß die Lage immer unter Spannung bleibt.

## Claims

1. Layer reel cooperating with a manipulator robot for the automatic mounting of electric layers provided with one upstream connector (16) and one downstream connector and extending perpendicular to the connectors, wherein it comprises a drum (1) rotary-mounted with respect to a support (9) and associated with drive means (13), means (17; 17a, 17b, 18) for flange-mounting the upstream connector (16) on the drum (1) and stop means (24, 25, 26, 27, 28) for limiting rotation of the drum (1) and thus winding.

2. Layer reel according to claim 1, wherein the drum (1) includes one upper half-cylinder (2) and one lower half-cylinder (3) both mounted on a common flange (7) and separated by a gap (4) in which the layer is able to be engaged, said common flange (7) being connected to the outlet shaft of a motor (13), preferably a pneumatic motor.

3. Layer reel according to claim 2, wherein the upper half-cylinder (2) and the lower half-cylinder (3) comprise inside recesses (2a and 3a) required to house the upstream connector (16) and its flanging means (17, 17a, 17b, 18).

4. Layer reel according to claim 2 or 3, wherein the means for flange-mounting the upstream connector (16) include one flange (17) comprising two ears (17a) joined onto a spindle (18) mounted on the upper half-cylinder (2), the two ears (17a) being connected to a connecting strap (17b) on which resting are springs (20) exerting a clamping force on the connector (16).

5. Reel according to claim 4, wherein the upper half-cylinder (2) is provided with an adjustable stop (23) able to limit rotation of the clamping flange (17) around its axis.

6. Reel according to claim 2 or 4, wherein the reel stop means include a mobile finger (24) sliding into both one oblong hole (25) having an adjustable length provided in the support (9) of the reel and into a spiral lamp (26) embodied on a disk (27) rotary-integral with the motor (13).

7. Reel according to any one of the preceding claims, wherein it comprises a pneumatic automatic control cooperating with the automatic control of the manipulator robot and able to apply to the pneumatic motor (18) a pressure corresponding to fast winding, slow winding or unwinding compatible with the speed of movement of the robot so that the layer is always tensioned.

# FIG.1

# FIG. 2

# FIG. 6

FIG. 3

EP 0 320 388 B1

# FIG.4

# FIG.5